# EUROPEAN PATENT SPECIFICATION

(11) **EP 4 290 786 B1**
(45) Date of publication and mention of the grant of the patent: **24.09.2025**
(21) Application number: 22177812.9
(22) Date of filing: 08.06.2022
(51) Int. Cl.: H04B 10/112, H04B 10/114, H04B 10/116

(54) **INFORMATION EXCHANGE USING AN EVENT CAMERA**
INFORMATIONSAUSTAUSCH UNTER VERWENDUNG EINER EREIGNISKAMERA
ÉCHANGE D'INFORMATIONS À L'AIDE D'UNE CAMÉRA D'ÉVÉNEMENT

(43) Date of publication of application: 13.12.2023
(73) Proprietor: IniVation AG, 8050 Zürich (CH)
(72) Inventor: Giraud, Pierre, 8057 Zurich (CH); Radomski, Adam, 8600 Dübendorf (CH)
(74) Representative: P&TS SA (AG, Ltd.)

(56) References cited:
- US-A1- 2009 110 405
- US-A1- 2014 270 801
- US-B1- 11 063 667
- TANG ZHENGQIANG ET AL: "A Preliminary Investigation For Event Camera-Based Visible Light Communication Using The Propeller-type Rotary LED Transmitter", 2022 IEEE INTERNATIONAL CONFERENCE ON COMMUNICATIONS WORKSHOPS (ICC WORKSHOPS), IEEE, 16 May 2022 (2022-05-16), pages 646 - 650, XP034145992, [retrieved on 20220711], DOI: 10.1109/ICCWORKSHOPS53468.2022.9814467

## Description

### Field of the invention

The present invention relates to a method for transmitting a binary data sequence comprising at least two binary values from an information source to an information destination. The present invention further relates to an assembly comprising an information source, a light source, an event camera and an information destination, and to a computer program product.

### Background to the invention

Event cameras such as the dynamic vision sensor (DVS) are known in the fields of robotics and autonomous driving, for example. Contrary to classical camera sensors, event camera sensors only provide an output in case something changes in the scene which they are observing. Said differently, if no changes occur, the event camera provides no output, while a classical camera would still (periodically) sample the unchanging scene it observes. An event camera may therefore provide a sparse output with low latency and high dynamic range as event cameras often operate on a logarithm of incoming light intensity. Furthermore, as each pixel in an event camera is typically independent of other pixels, only those pixels of the event camera at which changes occur would generate events, thereby making the output of an event camera even sparser. The publications, US 110 636 67 B1 and *"*A Preliminary Investigation For Event Camera-Based Visible Light Communication Using The Propeller-type Rotary LED Transmitter", Zhengqiang Tang, et al., published in: 2022 IEEE International Conference on Communications Workshops (ICC Workshops), DOI: 10.1109/ICCWorkshops53468.2022.9814467*,* disclose example applications of event cameras for light communication systems using event cameras. Event cameras may be therefore suited for high-speed control applications or for surveying applications, for example, as they would only react once changes happen. A potential drawback of event cameras is that during times of rapid changes such as background illumination changes due to changing illumination conditions, a large number of events may be generated; in some cases, event cameras may therefore generate larger amounts of data than classical camera sensors.

In control/surveying applications in which classic camera sensors are used, a large amount of computing power often needs to be spent to process images, often involving wasted computation during times of no/insignificant changes to the observed scene. The publication US 2014/0270801 A1 serves as a perfect example of wasted computer power.

In more abstract terms, an information source may want to transmit some information to an information destination. A possible information source is, e.g., a traffic light control software operating a traffic light, and an information destination is, e.g., an algorithm used as part of an autonomous driving software which decides whether a car should accelerate. In case a conventional camera installed in a car monitors a traffic light, most of the captured data may be irrelevant for the specific task at hand and therefore wasted. In contrast, other solutions known from prior art, such as those disclosed in US 2009/0110405 A1, might not be suitable for operating in these situations.

It is an object of the present invention to mitigate at least some of the disadvantages associated with information transmission between an information source and an information destination. In particular, the present invention provides a fast and robust information transmission between the information source and the information destination.

### Summary of the invention

According to a first aspect of the present invention there is provided a method for transmitting a binary data sequence comprising at least two binary values from an information source to an information destination, involving the steps recited in claim 1. Further features and embodiment of the method of the present invention are described in the dependent patent claims.

The invention relates to a method for transmitting a binary data sequence comprising at least two binary values from an information source to an information destination. The method comprises the following steps: 1) determining a line code representation based on the binary data sequence, wherein the line code representation is such that a clock used for determining the line code representation based on the binary data sequence is recoverable from the line code representation, 2) optically transmitting the line code representation using a light source by modulating emitted light intensity of the light source based on the line code representation, 3) capturing the optically transmitted line code representation using an event camera, wherein the event camera is configured to generate events based on intensity changes in the captured optically transmitted line code representation, and 4) determining a recovered binary data sequence based on the generated events, wherein the determining of the recovered binary data sequence comprises recovering the clock based on the generated events and measuring at least one time difference between generated events using the recovered clock.

The term binary data sequence may refer to all temporally discretized and quantized data sequences which may be converted without loss of information to a binary data sequence comprising '1' and '0' entries. The term line code representation may refer to a representation which may be transmitted over a physical channel, in particular an optical channel: as such, the term line code representation may refer to a representation which is quantized in amplitude but continuous in time, for example. The line code representation may be adapted to the physical channel over which it is transmitted. In noisy channels, for example, line code representations comprising fine amplitude quantization may be less robust to noise than line code representations comprising coarse amplitude quantization. The line code representation may furthermore be adapted to the available bandwidth of the physical channel: in case of limited bandwidth, for example, information in the line code representation may not be encoded in too steep flanks of the line code representation.

The information source and the information destination may not be actively synchronized with one another. The line code representation used is such that based on the line code representation, the clock used for encoding the binary data sequence (or a processed form of the binary data sequence) into the line code representation is faithfully recoverable even in case of longer intervals during which a same binary value is transmitted over the physical channel. By observing the line code representation (respectively a suitably sampled version of the line code representation), the information destination may synchronize its own clock to the clock of the information source, e.g., using a phase-locked loop, and thereby measure time in a similar way as done by the information source.

The line code representation is transmitted over an optical channel, e.g., embodied as air or as a dedicated cable. The line code representation may be transmitted by a flashing LED, for example. In case the line code representation comprises only two possible magnitude values, for example, the LED may be turned on for one of the two possible magnitude values and turned off for the other of the two possible magnitude values. The information present in the original binary data sequence may therefore be temporally encoded into a succession of LED flashes.

The transmitted line code representation is captured by an event camera. An event camera may comprise a matrix of pixels which act independently of one another. Each pixel typically produces an event in case an observed intensity of light impinging on its photosensitive area changes: events may represent increasing and/or decreasing intensity. Besides the desired optically transmitted line code representation impinging on the event camera, background light changes or other light sources may also lead to events which are generated by the event camera. It may be therefore assumed that the information destination knows which encoding method the information source is using to derive the line code representation from the binary data sequence: this way, suitable (frequency) filtering may be implemented by the information destination to separate events corresponding to the desired optically transmitted line code representation from in general undesired events caused by other light changes. The events corresponding to the line code representation are used by the information destination to synchronize its clock to the clock of the information source. In case the line code representation is, for example, such that the binary data sequence is encoded in periodically spaced rising or falling flanks, rising or falling events will typically also be generated by the event camera. The clock of the information destination may be synchronized to such periodically occurring events. Subsequently, a binary data sequence may be recovered by the information destination. For this purpose, at least one time difference between events may be determined; the at least one time difference may be determined between events of opposite polarity (corresponding to rising or falling intensity).

In an embodiment of the method according to the invention, the binary data sequence is modified using an error correction code prior to determining the line code representation based on the binary data sequence.

To allow the information destination to at least partly remove potential errors in the recovered binary data sequence and thereby bring the recovered binary data sequence closer to the binary data sequence, the information source may apply error correction techniques to the binary data sequence prior to determining a line code representation. A possible error correction technique are checksums, for example. Other error correction techniques are, however, also possible.

In a further embodiment of the method according to the invention, the determined line code representation based on the binary data sequence is a Manchester code representation.

In a Manchester code, information is encoded in the flanks of the line code representation lying in the middle of the underlying clock period. The information destination may therefore recover the binary data sequence based on (polarized - i.e., measuring increasing resp. decreasing intensity) events at these periodically spaced times in the middle of the underlying clock periods.

In a further embodiment of the method according to the invention, the determined line code representation based on the binary data sequence maps at least one group of binary values of the binary data sequence onto a respective at least one group of transmission binary values.

Besides Manchester coding or modifications thereof, more general line coding schemes may be used which map, e.g., m data bits of the binary data sequence onto n line bits which are then used to, e.g., define control signals for a light source optically transmitting the line code representation.

In a further embodiment of the method according to the invention, a prefix binary data sequence is prepended to the binary data sequence.

To inform the information destination that data transmission is about to start, the information source may prepend a prefix binary data sequence to the binary data sequence. In case the prefix binary data sequence is also known to the information destination, such a prefix binary data sequence may allow the information destination to know when actual data transmission commences.

In a further embodiment of the method according to the invention, the line code representation comprises at least one fundamental frequency at which information related to the binary data sequence is transmitted, and the determining of the recovered binary data sequence comprises frequency filtering the generated events to determine events temporally separated from one another at at least one fundamental period corresponding to the at least one fundamental frequency.

In case information is transmitted at periodic time points (e.g., in the middle of underlying clock periods in case of Manchester coding), the respective at least one fundamental period corresponds to at least one fundamental frequency. To separate such periodically occurring events from spurious events caused by background light changes, for example, frequency filtering may be performed. Frequency filtering may proceed as follows: the information destination may know a fundamental frequency f at which information is transmitted by the information source; the information destination may set up a Gaussian distribution centered at a corresponding fundamental period with a variance determined by known properties of the used specific event camera. The probability of time differences between generated events based on the set-up Gaussian distribution may be evaluated, and thereby the likelihood may be determined that a specific pair of events corresponds to the information transmitted by the information source.

In a further embodiment of the method according to the invention, the binary data sequence is an identifier sequence encoding identity information about the information source.

The detected identifier sequence may influence behavior of the information destination, e.g., in an authentication application. The information destination may also commence with further processing, i.e., "wake up", after detection of an identifier sequence.

In a further embodiment of the method according to the invention, a second binary data sequence is transmitted from the information source to the information destination at least partly in parallel to the transmitting of the binary data sequence.

The information source may also transmit a second binary data sequence, which second binary data sequence is independent of the binary data sequence, to the information destination while also transmitting the binary data sequence. The information source may also transmit further independent binary data sequences to the information destination. The second (and potentially further) binary data sequence(s) may be transmitted to the information destination by similar means as the binary data sequence.

In a further embodiment of the method according to the invention, a second line code representation based on the binary data sequence is determined, wherein the second line code representation is such that a second clock used for determining the second line code representation based on the second binary data sequence is recoverable from the second line code representation, and the second line code representation is optically transmitted using the light source or using a second light source, and the optically transmitted second line code representation is captured by the event camera.

For transmitting the second line code representation, a second light source distinct from the light source used for transmitting the line code representation may be used. The second light source may be physically separated from the light source. For a separate second light source, events generated by the event camera may be clustered into a group corresponding to the light source and into a group corresponding to the second light source based on spatial criteria or on temporal criteria. In case the light source can independently emit at multiple wavelengths, for example, one and the same light source may be used for emitting both the line code representation and the second line code representation, e.g., at different wavelengths. Using color filters on the event camera (e.g., embodied in the form of a Bayer pattern), the line code representation and the second line code representation may be separated. In case multiple light sources are available, the information source may also transmit information to the information destination using spatial encoding: depending on which of the light sources is - at a given moment in time - on or off, different data may be transmitted to the information destination. The second clock may be the same clock as the clock used for encoding the binary data sequence into the line code representation. Alternatively, it may be a different clock, or it may be a derived clock from the clock for encoding the binary data sequence.

In a further embodiment of the method according to the invention, the second line code representation comprises at least one second fundamental frequency which at least partly differs from the at least one fundamental frequency.

The information in the second binary data sequence may therefore be transmitted at different rates compared to the information transmitted in the binary data sequence. Such knowledge may be used by the information destination to separate events corresponding to the binary data sequence from events corresponding to the second binary data sequence.

According to a further aspect of the present invention there is provided an assembly comprising an information source, a light source, an event camera and an information destination, wherein the assembly is configured to carry out a method according to the invention.

Information source and light source may be embodied as distinct physical entities or may be provided as one physical object. The information source may also correspond to software running on an information source computing device, and the information destination may also correspond to software running on a computing device. Alternatively, information source and/or information destination may be embodied as dedicated hardware, e.g., in the form of an application-specific integrated circuit or as a field-programmable gate array. Besides the optical transmission of the line code representation (or additional line code representations such as the second line code representations), no further information exchange between the information source and the information destination may need to take place.

In an embodiment of the assembly according to the invention, the information destination is embodied as a computing device, in particular as a microprocessor, and the information source is embodied as one of: 1) a traffic light control unit, or 2) a car lighting control unit, or 3) an active marker control unit for robot tracking, or 4) a docking station control unit for space application and/or logistics applications and/or robotics applications, or 5) an aircraft and/or drone landing control unit, or 6) a calibration system for surveying, in particular using a total station, or 7) wearable or portable devices attached to humans or animals.

The method according to the invention may, however, also be applied to other use cases/applications. As logistic application, robot localization in warehouses may use the method according to the invention Instead of using QR codes at known locations in the warehouse.

In a further embodiment of the assembly according to the invention, the light source is embodied as a light-emitting diode (LED), and/or the light source is an infrared (IR) and/or visible and/or ultraviolet light source, and/or color filters or polarization filters are attached to the light source and/or to the event camera, and/or the assembly is configured to carry out multispectral sensing.

In a further embodiment of the assembly according to the invention, the light source is shaped in such a way that based on events generated by the event camera capturing the light source during optical transmitting of the line code representation distance and orientation of the light source with respect to the event camera may be estimated.

According to a further aspect of the present invention there is provided a computer program product comprising program code, wherein the computer program product is configured to receive as input events generated by an event camera capturing a light source optically transmitting a line code representation, and which program code when executed on a computing device causes the computing device to carry out the following: determining a recovered binary data sequence based on the received events, wherein the determining of the recovered binary data sequence comprises recovering a clock based on the received events and measuring at least one time difference between received events using the recovered clock.

### Brief description of drawings

Exemplar embodiments of the invention are disclosed in the description and illustrated by the drawings in which:
Fig. 1 illustrates schematically the functioning of an event camera observing a flashing light-emitting diode (LED);
Fig. 2 illustrates schematically an assembly according to the invention;
Figs. 3 to 7 illustrate schematically different embodiments of an assembly according to the invention; and
Fig. 8 illustrates schematically a method according to the invention.

### Detailed description of drawings

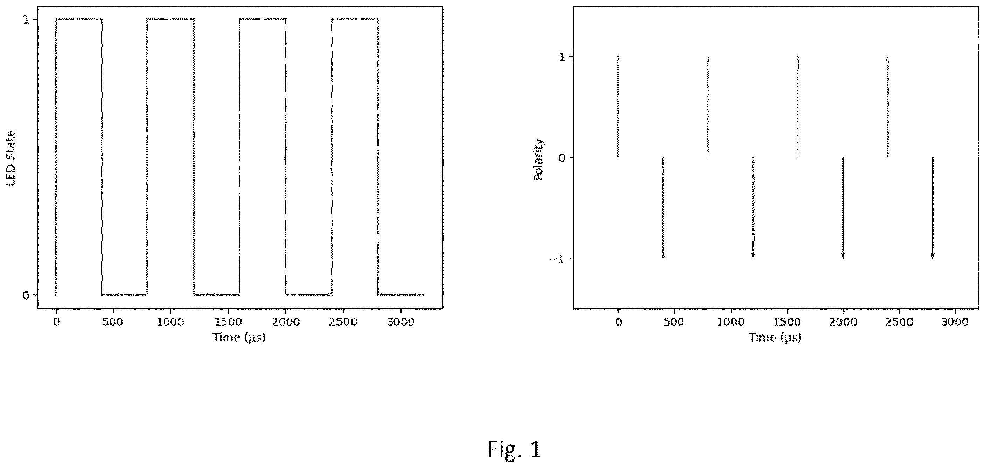

Fig. 1 schematically illustrates the functioning of an event camera observing a flashing light-emitting diode (LED). In the shown example, the LED is periodically turned on and off. The event camera in this embodiment is configured to generate events having polarity: an increasing intensity emitted by the LED and captured by the event camera corresponds to an event with polarity '1', while a decreasing intensity emitted by the LED and captured by the event camera corresponds to an event with polarity '-1'. In general, a flashing LED sends out light into many directions: a plurality of pixels of the event camera may therefore independently generate events, and each generated event may be tagged with an identifier describing the pixel which created it, with a time at which it was created and with a polarity.

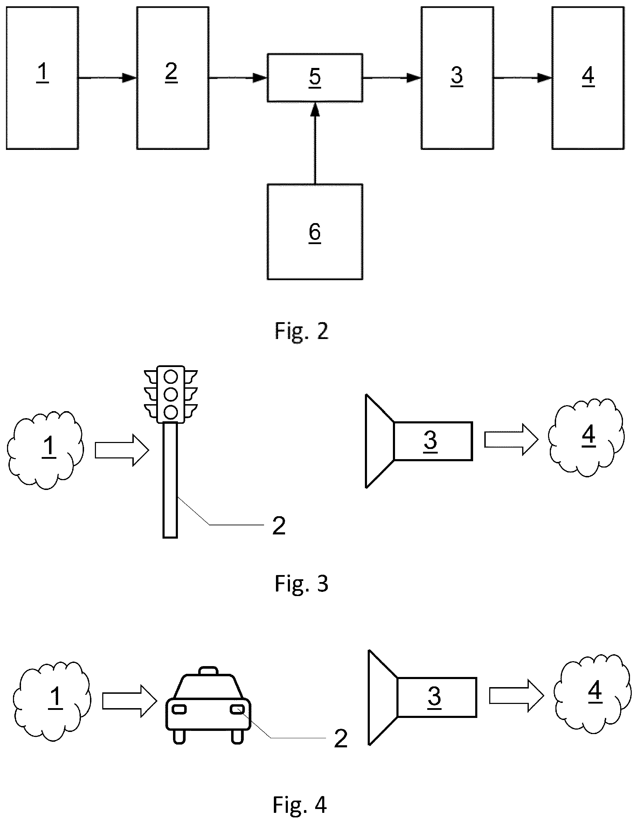

Fig. 2 schematically illustrates an assembly according to the invention. In Fig. 2, an information source 1, a light source 2, an event camera 3 and an information destination 4 are shown. The light source 2 is configured to transmit a line code representation to the event camera 3. The light source 2 transmits over a physical channel 5 which is subject to noise 6. Noise 6 as presently understood may refer to light emitted by other light sources which impinges on photosensitive areas of the event camera 3. Noise may, however, also arise in the event camera itself. The light source 2 is controlled by the information source 1 which instructs the light source 2 to transmit a line code representation corresponding to a binary data sequence.

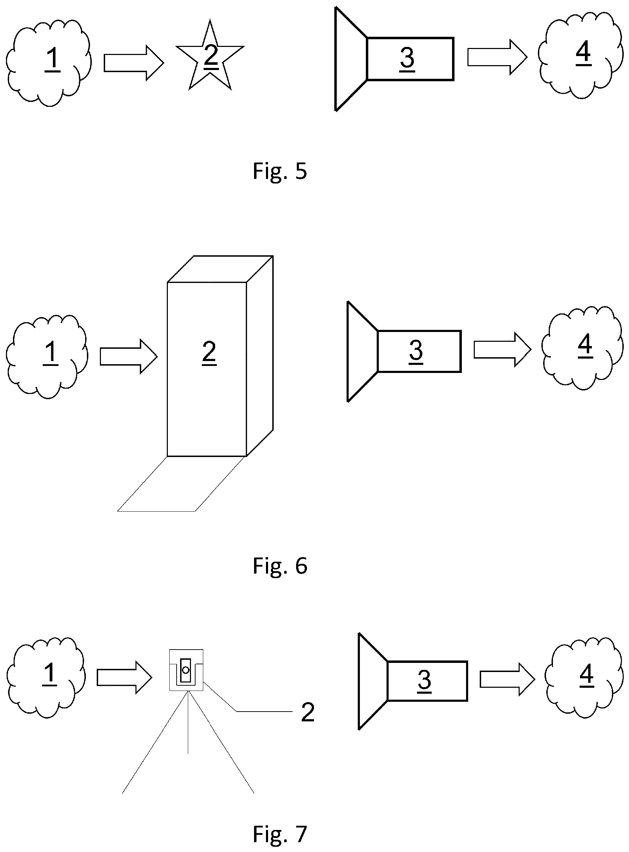

Figs. 3 to 7 illustrate schematically different embodiments of an assembly according to the invention. Fig. 3 depicts an embodiment in which an information source 1 controls a traffic light 2. The information source 1 may be separate from the traffic light 2 or may be part of the traffic light 2. An event camera 3 is configured to observe the flashing traffic light 2 and provide events to an information destination 4. Fig. 4 shows another embodiment in which the light source 2 is embodied as a car light 2. The information source 1 may again be part of a car which comprises the car light 2, or the information source 1 may be separate from the car. The event camera 3 may be part of another car, or the event camera 3 may be mounted on a different object in the environment through which the car drives. Fig. 5 shows another embodiment in which the light source 2 is embodied as an active marker 2 which is configured to flash based on input provided by the information source 1. Fig. 6 shows another embodiment in which the light source 2 is part of a docking station 2. The docking station 2 may emit light flashes to support a robot, for example, during docking. Fig. 7 shows a total station 2 which is configured to emit light for surveying am environment. Light flashes emitted by the total station 2 may be observed by an event camera 3.

The information source may therefore be embodied as one of: 1) a traffic light control unit controlling operation of a traffic light (corresponding to the light source), or 2) a car lighting control unit controlling operation of a car light (corresponding to the light source), or 3) an active marker control unit for robot tracking, with the active marker corresponding to the light source and emitting the line code representation, or 4) a docking station control unit for space application and/or logistics applications and/or robotics applications, with the docking station comprising the light source, or 5) an aircraft and/or drone landing control unit connected to an airborne or ground light source, or 6) a calibration system for surveying, in particular using a total station, or 7) wearable or portable devices attached to humans or animals.

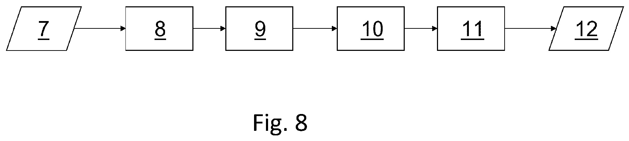

Fig. 8 schematically illustrates a method according to the invention. The method commences operation with a binary data sequence 7. In a first step, a line code representation is determined 8 based on the binary data sequence 7. In a second step, the line code representation is optically transmitted 9 using a light source. In a third step, the optically transmitted line code representation is captured 10 using an event camera, which event camera generates events. In a fourth step, based on the generated events a recovered binary data sequence 12 is determined 11.

## Claims

1. Method for transmitting a binary data sequence (7) comprising at least two binary values from an information source (1) to an information destination (4), the method comprising the following steps:
1) determining (8) a line code representation based on the binary data sequence (7), wherein the line code representation is such that a clock used for determining the line code representation based on the binary data sequence (7) is recoverable from the line code representation,
2) optically transmitting (9) the line code representation using a light source (2) by modulating emitted light intensity of the light source (2) based on the line code representation,
3) capturing (10) the optically transmitted line code representation using an event camera (3), wherein the event camera (3) is configured to generate events based on intensity changes in the captured optically transmitted line code representation, and
4) determining (11) a recovered binary data sequence (12) based on the generated events, wherein the determining of the recovered binary data sequence (12) comprises recovering the clock based on the generated events and measuring at least one time difference between generated events using the recovered clock, wherein the at least one time difference is used for recovering the binary data sequence (7).

2. Method according to claim 1, wherein the binary data sequence (7) is modified using an error correction code prior to determining the line code representation based on the binary data sequence (7).

3. Method according to claim 1 or 2, wherein the determined line code representation based on the binary data sequence (7) is a Manchester code representation.

4. Method according to claim 1 or 2, wherein the determined line code representation based on the binary data sequence (7) maps at least one group of binary values of the binary data sequence (7) onto a respective at least one group of transmission binary values.

5. Method according to any one of the preceding claims, wherein a prefix binary data sequence is prepended to the binary data sequence (7).

6. Method according to any one of the preceding claims, wherein the line code representation comprises at least one fundamental frequency at which information related to the binary data sequence (7) is transmitted, and wherein the determining of the recovered binary data sequence (12) comprises frequency filtering the generated events to determine events temporally separated from one another at at least one fundamental period corresponding to the at least one fundamental frequency.

7. Method according to any one of the preceding claims, wherein the binary data sequence (7) is an identifier sequence encoding identity information about the information source (1).

8. Method according to any one of the preceding claims, wherein a second binary data sequence is transmitted from the information source (1) to the information destination (4) at least partly in parallel to the transmitting of the binary data sequence (7).

9. Method according to claim 8, wherein a second line code representation based on the binary data sequence (7) is determined, wherein the second line code representation is such that a second clock used for determining the second line code representation based on the second binary data sequence is recoverable from the second line code representation, and wherein the second line code representation is optically transmitted using the light source (2) or using a second light source, and wherein the optically transmitted second line code representation is captured by the event camera (3).

10. Method according to claim 8 or 9, wherein the second line code representation comprises at least one second fundamental frequency which at least partly differs from the at least one fundamental frequency.

11. Assembly comprising an information source (1), a light source (2), an event camera (3) and an information destination (4), wherein the assembly is configured to carry out the method according to any of claims 1 to 10.

12. Assembly according to claim 11, wherein the information destination (4) is embodied as a computing device, in particular as a microprocessor, and wherein the information source (1) is embodied as one of: 1) a traffic light control unit, or 2) a car lighting control unit, or 3) an active marker control unit for robot tracking, or 4) a docking station control unit for space application and/or logistics applications and/or robotics applications, or 5) an aircraft and/or drone landing control unit, or 6) a calibration system for surveying, in particular using a total station, or 7) wearable or portable devices attached to humans or animals.

13. Assembly according to claim 11 or 12, wherein the light source (2) is embodied as a light-emitting diode (LED), and/or wherein the light source (2) is an infrared (IR) and/or visible and/or ultraviolet light source, and/or wherein color filters or polarization filters are attached to the light source (2) and/or to the event camera (3), and/or wherein the assembly is configured to carry out multispectral sensing.

14. Assembly according to any one of claims 11 to 13, wherein the light source (2) is shaped in such a way that based on events generated by the event camera (3) capturing the light source (2) during optical transmitting of the line code representation distance and orientation of the light source (2) with respect to the event camera (3) may be estimated.

15. Computer program product comprising program code, wherein the computer program product is configured to receive as input events generated by an event camera (3) capturing a light source (2) optically transmitting a line code representation, and which program code when executed on a computing device causes the computing device to carry out the following: determining a recovered binary data sequence (12) based on the received events, wherein the determining of the recovered binary data sequence (12) comprises recovering a clock based on the received events and measuring at least one time difference between received events using the recovered clock, wherein the at least one time difference is used for recovering the binary data sequence (7).

## Patentansprüche

1. Verfahren zum Übertragen einer binären Datenfolge (7) mit mindestens zwei Binärwerten von einer Informationsquelle (1) zu einem Informationsziel (4), wobei das Verfahren die folgenden Schritte umfasst:
1) Bestimmen (8) einer Zeilencodedarstellung basierend auf der binären Datensequenz (7), worin die Zeilencodedarstellung derart ist, dass ein Takt, welcher zum Bestimmen der Zeilencodedarstellung basierend auf der binären Datensequenz (7) verwendet wird, aus der Zeilencodedarstellung wiederhergestellt werden kann,
2) optisches Übertragen (9) der Zeilencodedarstellung unter Verwendung einer Lichtquelle (2) durch Modulieren der emittierten Lichtintensität der Lichtquelle (2) basierend auf der Zeilencodedarstellung,
3) Erfassen (10) der optisch übertragenen Zeilencodedarstellung mit einer Ereigniskamera (3), worin die Ereigniskamera (3) dazu konfiguriert ist, Ereignisse basierend auf Intensitätsänderungen in der erfassten optisch übertragenen Zeilencodedarstellung zu erzeugen, und
4) Bestimmen (11) einer wiederhergestellten binären Datensequenz (12) basierend auf den generierten Ereignissen, worin das Bestimmen der wiederhergestellten binären Datensequenz (12) das Wiederherstellen des Takts basierend auf den generierten Ereignissen und das Messen mindestens einer Zeitdifferenz zwischen generierten Ereignissen unter Verwendung des wiederhergestellten Takts umfasst, worin die mindestens eine Zeitdifferenz für die Wiederherstellung der binären Datensequenz (7) verwendet wird.

2. Verfahren gemäss Anspruch 1, worin die binäre Datensequenz (7) unter Verwendung eines Fehlerkorrekturcodes modifiziert wird, bevor die Zeilencodedarstellung basierend auf der binären Datensequenz bestimmt wird.

3. Verfahren gemäss Anspruch 1 oder 2, worin die bestimmte Zeilencodedarstellung basierend auf der binären Datensequenz (7) eine Manchester-Codedarstellung ist.

4. Verfahren gemäss Anspruch 1 oder 2, worin die bestimmte Zeilencodedarstellung basierend auf der binären Datensequenz (7) mindestens eine Gruppe von Binärwerten der binären Datensequenz (7) auf jeweils mindestens eine Gruppe von Übertragungsbinärwerten abbildet.

5. Verfahren gemäss irgendeinem der vorhergehenden Ansprüche, worin der binären Datensequenz (7) eine Präfix-Binärdatensequenz vorangestellt wird.

6. Verfahren gemäss irgendeinem der vorhergehenden Ansprüche, worin die Zeilencodedarstellung mindestens eine Grundfrequenz umfasst, auf der Informationen bezüglich der binären Datensequenz (7) übertragen werden, und worin das Bestimmen der wiederhergestellten binären Datensequenz (12) das Frequenzfiltern der erzeugten Ereignisse umfasst, um Ereignisse zu bestimmen, welche zeitlich um mindestens eine Grundperiode, die der mindestens einen Grundfrequenz entspricht, voneinander getrennt sind.

7. Verfahren gemäss irgendeinem der vorhergehenden Ansprüche, worin die binäre Datensequenz (7) eine Kennungssequenz ist, welche Identitätsinformationen über die Informationsquelle (1) kodiert.

8. Verfahren gemäss irgendeinem der vorhergehenden Ansprüche, worin eine zweite binäre Datensequenz zumindest teilweise parallel zur Übertragung der binären Datensequenz (7) von der Informationsquelle (1) zum Informationsziel (4) übertragen wird.

9. Verfahren gemäss Anspruch 8, worin eine zweite Zeilencodedarstellung basierend auf der binären Datensequenz (7) bestimmt wird, worin die zweite Zeilencodedarstellung derart ist, dass ein zweiter Takt, der zum Bestimmen der zweiten Zeilencodedarstellung basierend auf der zweiten binären Datensequenz verwendet wird, aus der zweiten Zeilencodedarstellung wiederhergestellt werden kann, und worin die zweite Zeilencodedarstellung unter Verwendung der Lichtquelle (2) oder unter Verwendung einer zweiten Lichtquelle optisch übertragen wird, und worin die optisch übertragene zweite Zeilencodedarstellung durch die Ereigniskamera (3) erfasst wird.

10. Verfahren gemäss Anspruch 8 oder 9, worin die zweite Zeilencodedarstellung mindestens eine zweite Grundfrequenz umfasst, welche sich zumindest teilweise von der mindestens einen Grundfrequenz unterscheidet.

11. Baugruppe, umfassend eine Informationsquelle (1), eine Lichtquelle (2), eine Ereigniskamera (3) und ein Informationsziel (4), worin die Baugruppe zur Durchführung des Verfahrens gemäss irgendeinem der Ansprüche 1 bis 10 konfiguriert ist.

12. Baugruppe gemäss Anspruch 11, worin das Informationsziel (4) als Rechengerät, insbesondere als Mikroprozessor, ausgebildet ist, und worin die Informationsquelle (1) als eines der folgenden ausgebildet ist: 1) eine Ampelsteuerungseinheit, oder 2) eine Autobeleuchtungssteuerungseinheit, oder 3) eine aktive Markierungssteuerungseinheit zur Roboterverfolgung, oder 4) eine Dockingstation-Steuerungseinheit für Weltraumanwendungen und/oder Logistikanwendungen und/oder Roboteranwendungen, oder 5) eine Landesteuerungseinheit für Flugzeuge und/oder Drohnen, oder 6) ein Kalibrierungssystem zur Vermessung, insbesondere unter Verwendung einer Totalstation, oder 7) tragbare oder mobile Geräte, die an Menschen oder Tieren befestigt sind.

13. Baugruppe gemäss Anspruch 11 oder 12, worin die Lichtquelle (2) als Leuchtdiode (LED) ausgeführt ist, und/oder worin die Lichtquelle (2) eine Infrarot- (IR) und/oder sichtbare und/oder ultraviolette Lichtquelle ist, und/oder worin an der Lichtquelle (2) und/oder an der Ereigniskamera (3) Farbfilter oder Polarisationsfilter angebracht sind, und/oder worin die Anordnung zur Durchführung einer multispektralen Erfassung konfiguriert ist.

14. Baugruppe gemäss irgendeinem der Ansprüche 11 bis 13, worin die Lichtquelle (2) derart geformt ist, dass auf Grundlage von Ereignissen, die von der Ereigniskamera (3) erzeugt werden, welche die Lichtquelle (2) während der optischen Übertragung der Zeilencodedarstellung erfasst, Abstand und Ausrichtung der Lichtquelle (2) in Bezug auf die Ereigniskamera (3) geschätzt werden können.

15. Computerprogrammprodukt mit Programmcode, worin das Computerprogrammprodukt derart konfiguriert ist, um als Eingabe Ereignisse zu empfangen, welche von einer Ereigniskamera (3) erzeugt werden, die eine Lichtquelle (2) erfasst, die eine Zeilencodedarstellung optisch überträgt, und wobei der besagte Programmcode, wenn er auf einem Computergerät ausgeführt wird, das Computergerät dazu veranlasst, Folgendes auszuführen: Bestimmen einer wiederhergestellten Binärdatensequenz (12) basierend auf den empfangenen Ereignissen, worin das Bestimmen der wiederhergestellten Binärdatensequenz (12) das Wiederherstellen eines Takts basierend auf den empfangenen Ereignissen und das Messen mindestens einer Zeitdifferenz zwischen empfangenen Ereignissen unter Verwendung des wiederhergestellten Takts umfasst, worin die mindestens eine Zeitdifferenz für die Wiederherstellung der binären Datensequenz (7) verwendet wird.

## Revendications

1. Procédé de transmission d'une séquence de données binaires (7) comprenant au moins deux valeurs binaires d'une source d'informations (1) vers une destination d'informations (4), le procédé comprenant les étapes suivantes :
1) déterminer (8) une représentation de code de ligne basée sur la séquence de données binaires (7), la représentation de code de ligne étant telle qu'une horloge utilisée pour déterminer la représentation de code de ligne basée sur la séquence de données binaires est récupérable à partir de la représentation de code de ligne,
2) transmettre optiquement (9) la représentation de code de ligne à l'aide d'une source lumineuse (2) en modulant l'intensité lumineuse émise par la source lumineuse (2) en fonction de la représentation de code de ligne,
3) capturer (10) la représentation de code de ligne transmise optiquement à l'aide d'une caméra d'événements (3), la caméra d'événements (3) étant configurée pour générer des événements en fonction des changements d'intensité dans la représentation de code de ligne capturée et transmise optiquement, et
4) déterminer (11) une séquence de données binaires récupérée (12) sur la base des événements générés, la détermination de la séquence de données binaires récupérée (12) comprenant la récupération de l'horloge sur la base des événements générés et la mesure d'au moins une différence de temps entre les événements générés à l'aide de l'horloge récupérée, la au moins une différence de temps étant utilisée pour récupérer la séquence de données binaires (7).

2. Procédé selon la revendication 1, dans lequel la séquence de données binaires (7) est modifiée à l'aide d'un code de correction d'erreur avant de déterminer la représentation de code de ligne sur la base de la séquence de données binaires (7).

3. Procédé selon la revendication 1 ou 2, dans lequel la représentation de code de ligne déterminée sur la base de la séquence de données binaires (7) est une représentation de code Manchester.

4. Procédé selon la revendication 1 ou 2, dans lequel la représentation de code de ligne déterminée sur la base de la séquence de données binaires (7) mappe au moins un groupe de valeurs binaires de la séquence de données binaires (7) sur au moins un groupe respectif de valeurs binaires de transmission.

5. Procédé selon l'une quelconque des revendications précédentes, dans lequel une séquence de données binaires de préfixe est ajoutée au début de la séquence de données binaires (7).

6. Procédé selon l'une quelconque des revendications précédentes, dans lequel la représentation de code de ligne comprend au moins une fréquence fondamentale à laquelle les informations relatives à la séquence de données binaires (7) sont transmises, et dans lequel la détermination de la séquence de données binaires récupérée (12) comprend le filtrage de fréquence des événements générés pour déterminer des événements temporellement séparés les uns des autres à au moins une période fondamentale correspondant à la au moins une fréquence fondamentale.

7. Procédé selon l'une quelconque des revendications précédentes, dans lequel la séquence de données binaires (7) est une séquence d'identifiant codant des informations d'identité sur la source d'informations (1).

8. Procédé selon l'une quelconque des revendications précédentes, dans lequel une deuxième séquence de données binaires est transmise de la source d'informations (1) à la destination d'informations (4) au moins partiellement en parallèle à la transmission de la séquence de données binaires (7).

9. Procédé selon la revendication 8, dans lequel une deuxième représentation de code de ligne basée sur la séquence de données binaires (7) est déterminée, dans lequel la deuxième représentation de code de ligne est telle qu'une deuxième horloge utilisée pour déterminer la deuxième représentation de code de ligne basée sur la deuxième séquence de données binaires est récupérable à partir de la deuxième représentation de code de ligne, et dans lequel la deuxième représentation de code de ligne est transmise optiquement à l'aide de la source lumineuse (2) ou à l'aide d'une deuxième source lumineuse, et dans lequel la deuxième représentation de code de ligne transmise optiquement est capturée par la caméra d'événement (3).

10. Procédé selon la revendication 8 ou 9, dans lequel la deuxième représentation de code de ligne comprend au moins une deuxième fréquence fondamentale qui diffère au moins partiellement de la au moins une fréquence fondamentale.

11. Ensemble comprenant une source d'informations (1), une source lumineuse (2), une caméra d'événements (3) et une destination d'informations (4), l'ensemble étant configuré pour mettre en œuvre le procédé selon l'une quelconque des revendications 1 à 10.

12. Ensemble selon la revendication 11, dans lequel la destination d'informations (4) est réalisée sous la forme d'un dispositif informatique, en particulier sous la forme d'un microprocesseur, et dans lequel la source d'informations (1) est réalisée sous la forme de : 1) une unité de commande de feux de circulation, ou 2) une unité de commande d'éclairage de voiture, ou 3) une unité de commande de marqueur actif pour le suivi de robot, ou 4) une unité de commande de station d'accueil pour des applications spatiales et/ou des applications logistiques et/ou des applications robotiques, ou 5) une unité de commande d'atterrissage d'avion et/ou de drone, ou 6) un système d'étalonnage pour la topographie, en particulier à l'aide d'une station totale, ou 7) des dispositifs portables ou nomades attachés à des humains ou des animaux.

13. Ensemble selon la revendication 11 ou 12, dans lequel la source lumineuse (2) est réalisée sous la forme d'une diode électroluminescente (LED), et/ou dans lequel la source lumineuse (2) est une source de lumière infrarouge (IR) et/ou visible et/ou ultraviolette, et/ou dans lequel des filtres de couleur ou des filtres de polarisation sont fixés à la source lumineuse (2) et/ou à la caméra d'événement (3), et/ou dans lequel l'ensemble est configuré pour effectuer une détection multispectrale.

14. Ensemble selon l'une quelconque des revendications 11 à 13, dans lequel la source lumineuse (2) est formée de telle manière que, sur la base des événements générés par la caméra d'événements (3) capturant la source lumineuse (2) pendant la transmission optique de la représentation de code de ligne, la distance et l'orientation de la source lumineuse (2) par rapport à la caméra d'événements (3) peuvent être estimées.

15. Produit de logiciel informatique comprenant un code de programme, dans lequel le produit de logiciel informatique est configuré pour recevoir en tant qu'entrée des événements générés par une caméra d'événement (3) capturant une source lumineuse (2) transmettant optiquement une représentation de code de ligne, et lequel code de logiciel, lorsqu'il est exécuté sur un dispositif informatique, amène le dispositif informatique à exécuter les opérations suivantes : déterminer une séquence de données binaires récupérée (12) sur la base des événements reçus, dans lequel la détermination de la séquence de données binaires récupérée (12) comprend la récupération d'une horloge sur la base des événements reçus et la mesure d'au moins une différence de temps entre les événements reçus à l'aide de l'horloge récupérée, la au moins une différence de temps étant utilisée pour récupérer la séquence de données binaires (7).
